(19) **Europäisches Patentamt**

**European Patent Office**

**Office européen des brevets**

(11) **EP 0 807 558 B1**

(12) **EUROPÄISCHE PATENTSCHRIFT**

(45) Veröffentlichungstag und Bekanntmachung des Hinweises auf die Patenterteilung:
**17.07.2002 Patentblatt 2002/29**

(51) Int Cl.⁷: **B60R 21/32**, B60R 22/46, B60R 21/13

(21) Anmeldenummer: **97107333.3**

(22) Anmeldetag: **03.05.1997**

(54) **Auslöseverfahren für passive Sicherheitseinrichtungen in Fahrzeugen**

Releasing method for passive safety devices in vehicles

Procédé de déclenchement d'un système de sécurité passif dans un véhicule

(84) Benannte Vertragsstaaten:
**DE ES FR GB IT SE**

(30) Priorität: **14.05.1996 DE 19619414**

(43) Veröffentlichungstag der Anmeldung:
**19.11.1997 Patentblatt 1997/47**

(73) Patentinhaber: **ATMEL Germany GmbH
74072 Heilbronn (DE)**

(72) Erfinder:
 • **Buchheim, Timm
 74523 Schwäbisch Hall (DE)**
 • **Schäfer, Gerhard, Dr.
 74189 Weinsberg (DE)**

(74) Vertreter: **Maute, Hans-Jürgen, Dipl.-Ing. et al
Daimler-Benz Aktiengesellschaft,
FTP/H,
Postfach 35 35
74025 Heilbronn (DE)**

(56) Entgegenhaltungen:
 **EP-A- 0 311 039       EP-A- 0 517 253
 WO-A-90/09298       WO-A-93/09008
 DE-A- 2 123 359       DE-A- 3 816 588
 DE-A- 4 424 551       DE-A- 19 537 546**

**Beschreibung**

Die Erfindung betrifft ein Verfahren zur Auslösung einer passiven Sicherheitsvorrichtung in einem Fahrzeug für Fahrzeuginsassen gemäß dem Oberbegriff des Patentanspruches 1.

Ein derartiges Verfahren ist aus der DE 4424551 A1 bekannt, bei dem die mittels eines Beschleunigungssensors erzeugten, der gemessenen Beschleunigung entsprechenden Signale einer Auswerteschaltung zugeführt werden, um bei Überschreiten eines vorgegebenen, für einen Aufprall typischen Schwellwertes ein Auslösesignal herbeizuführen. Um ein Auslöseverfahren von hoher Sicherheit realisieren zu können, wird gemäß diesem bekannten Verfahren die von dem Beschleunigungssensor gemessenen Sensorsignale einem aus einer Vergleichsschaltung bestehenden Schwellwertschaltung zwecks Quantifizierung zugeführt, die mindestens zwei fahrzeugtypische Schwellwerte erzeugt. Die Schwellwertschaltung aktiviert einen Zähler mit von dem ersten Schwellwert zum nächsten Schwellwert erhöhter Gewichtung. Der Zähler addiert zugeführte Taktimpulse mit der gegebenen Gewichtung und wird bei jedem Taktimpuls um eine Zahl, deren Gewichtung unter der des ersten Schwellwerts liegt dekrementiert. Der Zählerstand wird mit einem Auslöseschwellwert verglichen, bei dessen Erreichen das Auslösesignal erzeugt wird. Der Zähler wird zurückgestellt, wenn der Zählerstand negativ wird.

Passive Sicherheitsvorrichtungen in Fahrzeugen, wie beispielsweise Airbag, Gurtstraffer oder Überrollbügel, dienen dazu, die Fahrzeuginsassen im Falle eines Aufpralls (Crash) des Fahrzeuges vor Verletzungen zu schützen.

Andere bekannte Auslöseverfahren solcher Sicherheitsvorrichtungen führen die Beschleunigungssignale, die entweder von einem einzigen oder auch von zwei Beschleunigungssensoren erzeugt werden, einer Integration zu, um anschließend den Integrationswert mit einer Crash-Schwelle zu vergleichen, um dann ggf. die passive Sicherheitsvorrichtung auszulösen.

Vor einer Integration der Beschleunigungssignale werden diese in der Regel verstärkt, gefiltert und einem unsymmetrischen Begrenzer zugeführt, wie dies aus der DE 38 16 587 A1 bekannt ist. Von einem derart erzeugten Signal wird mittels einer Differenzschaltung ein Referenzwert subtrahiert und erst anschließend einem Integrator zugeführt. Die weitere Verarbeitung des integrierten Beschleunigungssignales erfolgt in Analogtechnik.

Neben der analogen Verarbeitung von Beschleunigungssignalen ist auch deren digitale Verarbeitung beispielsweise aus der DE 37 17 427 bekannt. Dort werden die Beschleunigungssignale zweier Sensoren nach einer Verstärkung und einer Filterung einer Sample- und Hold-Schaltung zugeführt, deren Ausgangssignale von einem nachgeschalteten A/D-Wandler digitalisiert wird.

Diese digitalisierten Sensorsignale werden von einem Mikroprozessor bearbeitet.

Eine solche digitale Verarbeitung ist auch aus der DE 30 01 780 C2 bekannt, wo die Beschleunigungssignale mittels eines 8-Bit-Analog/Digital-Wandlers umgesetzt und von einem 8-Bit-Prozessor verarbeitet werden.

Der Aufwand einer solchen 8-Bit-Verarbeitung ist nicht unerheblich, da dieser ein hoher Speicher- und Rechenaufwand zugrunde liegt.

Schließlich ist auch aus der DE 41 17 811 C2 ein Verfahren zur Auswertung von Sensorsignalen bekannt, die zunächst nach einer analogen Bearbeitung als Beschleunigungssignale digitalisiert werden. Diese digitalisierten Beschleunigungssignale werden in aufeinanderfolgenden Zeitabschnitten über ein bestimmtes Zeitintervall erfasst und in einem Schieberegister gespeichert. Einem Integrator wird die Differenz aus dem aktuellen und dem um das bestimmte Zeitintervall zurückliegenden Beschleunigungswert zugeführt, um hieraus eine Differenzgeschwindigkeit zu bilden, deren Wert als Auslösekriterium dient. Zur Durchführung der Speicherung und der Differenzbildung ist jedoch ebenfalls eine 8-Bit-Auflösung erforderlich.

Die Aufgabe der vorliegenden Erfindung besteht darin, ein Verfahren der eingangs genannten Art anzugeben, das mit einer geringen Bitbreite bei der Verarbeitung der Beschleunigungssignale auskommt und daher zu dessen Realisierung sowohl mit geringem Software- als auch Hardware-Aufwand realisierbar ist und trotzdem eine 100 %ige Sicherheit bei der Crash-Erkennung aufweist.

Diese Aufgabe wird gemäß den Merkmalen des Patentanspruches 1 gelöst. Hiernach werden die von den Beschleunigungssensoren gelieferten Sensorsignale quantifiziert und anschließend hieraus mittels einer Bewertungsfunktion Sensorsignalkennungswerte erzeugt. Diese Sensorsignalkennungswerte werden differenziert und danach deren Beträge aufintegriert. Schließlich werden die aufintegrierten Beträge mit einer Auslöseschwelle verglichen und ggf. die Sicherheitsvorrichtung ausgelöst.

Bei diesem erfindungsgemäßen verfahren werden die Steigungswerte der Sensorsignale in jedem Zeitabschnitt eines vorgegebenen zeitrasters erfaßt, bearbeitet und ausgewertet.

Das erfindungsgemäße Verfahren erlaubt eine kostengünstige schaltungstechnische Realisierung. Insbesondere bietet sich nach der Quantifizierung eine digitale Verarbeitung der Sensorsignale an, da beispielsweise bei einer Verwendung von zwei Sensoren mit zwei Schwellen zur Quantifizierung maximal 4 Bit nebeneinander verarbeitet werden müssen. Diese geringe Bitbreite wird durch die starke Eingangsquantifizierung möglich, so daß die Auslöseschwelle ebenfalls digital eingestellt werden kann. Daneben kann die Realisierung der Verfahrensschritte nach der Quantifizierung auch durch einen vorhandenen Prozessor oder einen zusätzlichen Kleinst-Prozessor (4 Bit) vorgenommen werden.

Vorzugswelse kann bei diesem erfindungsgemäßen Verfahren als Bewertungsfunktion die Addition der quantifizierten Sensorsignale verwendet werden, so daß beispielsweise bei Verwendung von zwei Sensoren mit jeweils zwei Schwellen ein sehr einfaches Verfahren vorliegt, mit dem alle Crash-Arten zu 100 % klassifiziert werden. Werden bei diesem Ausführungsbeispiel der Erfindung die Empfindlichkeitsachsen von zwei Beschleunigungssensor mit einem Winkel von +45° bzw. -45° gegen die Längsachse des Fahrzeuges in Fahrtrichtung installiert, geht die von diesen Beschleunigungssensoren gelieferte Richtungsinformation allerdings verloren.

Diese Richtungsinformation geht bei einer anderen vorteilhaften Weiterbildung der Erfindung nicht verloren, wenn anstelle der Addition als Bewertungsfunktion eine Bewertungsmatrix derart vorgesehen wird, daß jedem quantifizierten Sensorwert ein Sensorsignalkennungswert aus der Bewertungsmatrix zugeordnet werden kann.

Damit wird eine zusätzliche Bewertung der quantifizierten Sensorsignale in Abhängigkeit der Richtungsinformation vorgenommen, wodurch das Zündverhalten im Vergleich zu dem Verfahren, bei dem die Addition als Bewertungsfunktion verwendet wird, wesentlich verbessert ist. In vorteilhafter Weise können die Matrixwerte in Abhängigkeit von der Fahrzeugsignatur gewählt werden und können auf das jeweilige Fahrzeug mit Hilfe der Crash-Daten abgestimmt werden.

Besonders vorteilhaft wird das erfindungsgemäße Verfahren dann, wenn die Quantifizierung der Sensorsignale mittels zwei Schwellwerten durchgeführt wird. Dabei sind sie so gewählt, daß eine positive bzw. negative Beschleunigung erkannt wird und somit die informationen "keine Beschleunigung", "positive Beschleunigung" und "negative Beschleunigung" als quantifizierte sensorwerte vorliegen.

Daneben führt die Verwendung von zwei positiven Schwellen in manchen Fällen zu einem zeitlich verbesserten Auslöseverhalten des erfindungsgemäßen Verfahrens. Dabei werden diese schwellen derart festgelegt, daß die Informationen "keine Beschleunigung", "schwach positive Beschleunigung" und "stark positive Beschleunigung" vorliegen.

Bei einer weiteren bevorzugten Ausführungsform der Erfindung werden die quantifizierten Sensorwerte zweier Sensoren einer Identitätsfunktion als einer weiteren Bewertungsfunktion unterworfen, wobei Identität dann vorliegt, wenn die sensorsignale der beiden Sensoren gleichzeitig eine positive Beschleunigung anzeigen. Liefert eine solche Identitätsfunktion bei zeitlich aufeinanderfolgenden Sensorwerten ein positives Ergebnis, wird ein linear ansteigendes Crash-Signal erzeugt. Ferner wird bei einem erstmaligen Auftreten eines positiven Ergebnisses dieser Identitätsfunktion eine anstelgende Crash-Schwelle erzeugt, wobei eine Auslösung dann erfolgt, wenn der Wert des Crash-SIgnals die Crash-Schwelle erreicht. Bei Verwendung einer solchen Identitätsfunktion wird die Crash-Schwelle so gesteuert, daß sie mit kleinen werten beginnt und dann mit dem vorgegebenen Zeitraster relativ steil ansteigt. Dies führt zu einem sehr guten zeitlichen Verhalten, also zu einer sehr schnellen Zündung bei einem für Fahrzeuginsassen gefährlichen Fahrzeugcrash.

Wird vorzugsweise eine Crash-Schwelle mit einem exponentiellen Verlauf gewählt, kann In vorteilhafter Weise dieses Verfahren nur am Anfang eines Crashs zur Auslösung führen.

zur Durchführung des erfindungsgemäßen Verfahrens wird eine Vorrichtung gemäß den Ansprüchen 9 bis 13 angegeben. Hiernach werden zur Quantifizierung der sensorsignale Komparatoren eingesetzt, deren Ausgangswerte vorzugsweise D-Flip-Flops zur Zwischenspeicherung zugeführt werden.

Ferner werden bei einer vorteilhaften Ausführungsform zwei Beschleunigungssensoren eingesetzt, deren Empfindlichkeitsachsen mit einem Winkel von +45° bzw. -45° gegen die Längsachse des Fahrzeuges in Fahrtrichtung gerichtet sind. Bei einem solchen Ausführungsbeispiel wird vorzugsweise als Bewertungsmatrix eine 3 x 3-Matrix eingesetzt.

Die Realisierung der Identitätsfunktion als Bewertungsfunktion wird mittels eines Komparators durchgeführt, dem zur Realisierung des Crash-Signals ein Zähler nachgeschaltet ist.

Die Realisierung der zugehörigen Crash-Schwelle erfordert einen Taktgenerator, ein als Zähler verwendetes Schieberegister und ein diesem Schieberegister nachgeschalteten Addierer, wobei der Addierer die Crash-Schwelle liefert, der Inhalt des Schieberegisters im Addierer zu einem Startwert addiert wird und das Schieberegister dem Komparator derart nachgeschaltet ist, daß es mit dem Zählvorgang bei Vorliegen einer Identität der quantisierten Sensorsignale beginnt und der Schiebetakt von dem Taktgenerator erzeugt wird.

Im folgenden soll das erfindungsgemäße Verfahren anhand von Ausführungsbeispielen im Zusammenhang mit den Zeichnungen dargestellt und erläutert werden. Es zeigen:

Figur 1       ein Blockschaltbild einer Airbagsteuereinheit als Ausführungsbeispiel des erfindungsgemäßen Verfahrens,

Figur 2       eine Schaltungsanordnung der Auswerteeinheit 1 gemäß Figur 1,

Figur 3       eine Darstellung der in einem Fahrzeug angesteuerten Sensoren,

| Figur 4 | eine mittels eines Prozessors aufgebaute Auswerteeinheit 1 gemäß Figur 1, |
|---|---|
| Figur 5 | ein Programmablaufplan zur Durchführung des erfindungsgemäßen Verfahrens mittels des Mikroprozessors gemäß Figur 4, |
| Figur 6 | eine Teildarstellung der Schaltungsanordnung nach Figur 2 mit einer Bewertungs-Matrix anstelle der Addierstufe 7, |
| Figuren 7a und 7b | Ausführungsbeipiele einer als Bewertungsfunktion dienenden Bewertungs-Matrix, |
| Figur 8 | ein Blockschaltbild eines weiteren Ausführungsbeispieles zur Durchführung des erfindungsgemäßen Verfahrens, |
| Figur 9 | ein Programmablaufplan zur softwaremäßigen Realisierung der Funktion der Schaltungsanordnung gemäß Figur 8, und |
| Figur 10 | ein Signaldiagramm zur Erläuterung des erfindungsgemäßen Verfahrens nach Figur 8. |

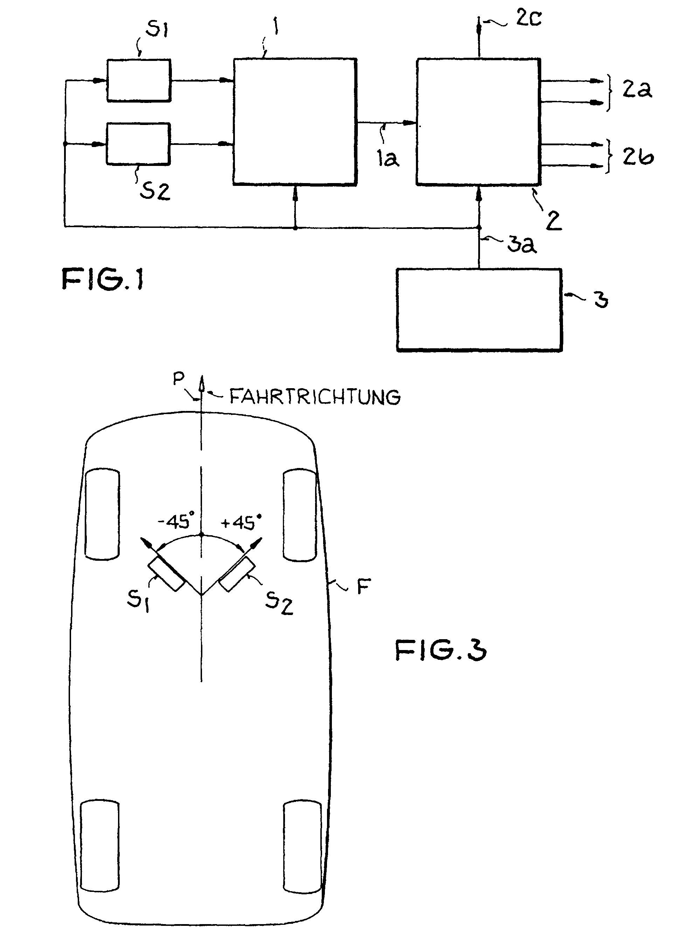

Figur 1 zeigt eine Airbagsteuereinheit für Kraftfahrzeuge mit den Funktionsblöcken Auswerteeinheit 1, Leistungsteil 2 und einem Diagnoserechner 3. Die von zwei Beschleunigungssensoren S1 und S2 gelieferten Beschleunigungssignale werden zur Auswertung der Auswerteeinheit 1 zugeführt, die anhand dieser Sensorsignale auf den Fahrzeugzustand schließt. Wenn diese Beschleunigungssignale auf einen drohenden Zusammenstoß des Fahrzeuges hindeuten, werden über eine Leitung 1a Zündbefehle an die Leistungseinheit 2 weitergegeben. Dieser Leistungsteil generiert bei Vorliegen von Zündbefehlen Zündsignale für die Auslösemittel von Airbags 2b, Gurtstraffer 2a und Gurtschloßschalter 2c. Der Diagnoserechner 3 überwacht und überprüft die Funktionstüchtigkeit des gesamten Systems.

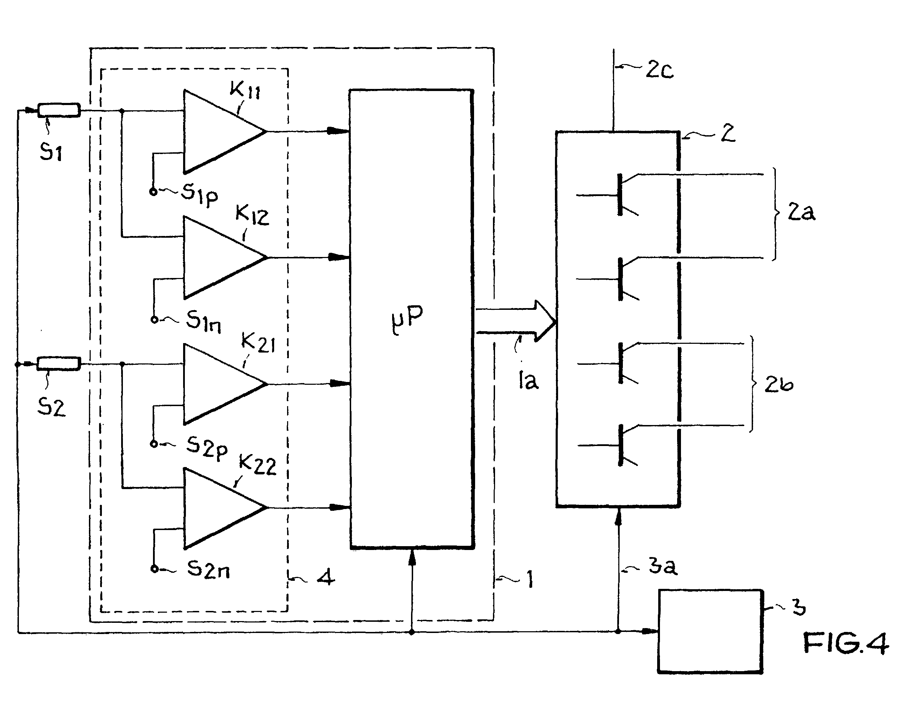

Die Sensoren S1 und S2 sind gemäß Figur 3 um 90° gegeneinander versetzt und jeweils 45° gegen die Fahrtrichtung P im Fahrzeug F angeordnet, so daß die Sensorsignale auch Richtungsinformationen bzgl. der Aufprallrichtung liefern.

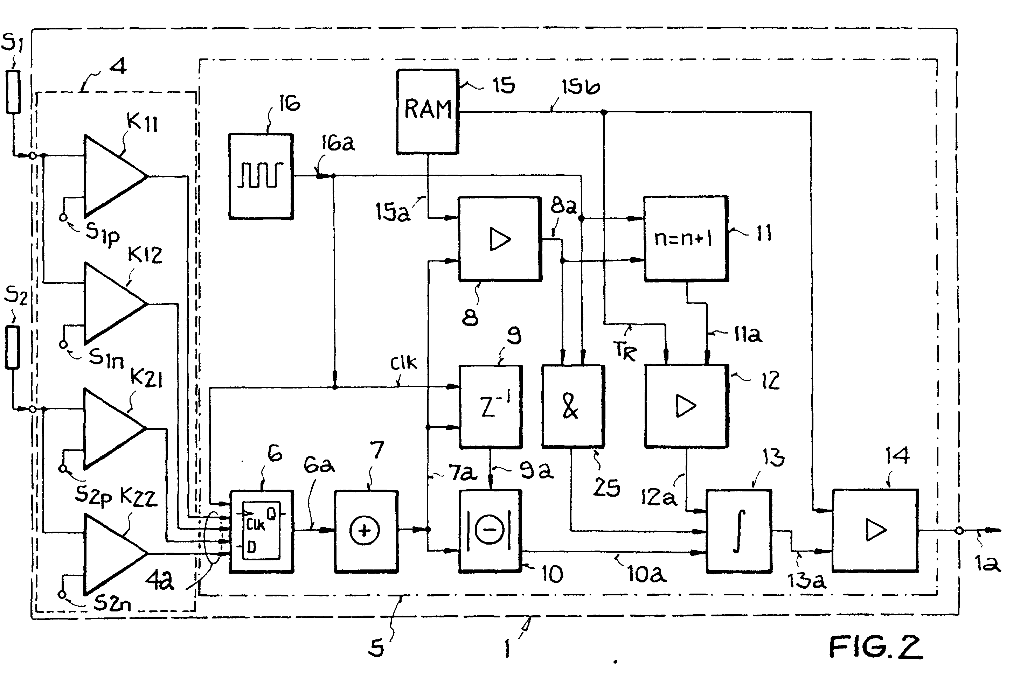

Eine hardwaremäßige Realisierung der Auswerteeinheit 1 gemäß Figur 1 ist in Figur 2 dargestellt und besteht aus einer Quantifizierungseinheit 4 und einer Auswerteschaltung 5.

Zur Quantifizierung der Sensorsignale wird das Beschleunigungssignal des Sensors S1 jeweils zwei Komparatoren K11 und K12 und die sensorsignale des Sensors S2 jeweils zwei weiteren Komparatoren K21 und K22 zugeführt. Als Schwellen zur Quantifizierung dienen jeweils eine positive und negative Schwelle s1n, s1p bzw. s2n, s2p:

$$\text{Sensor S1: s1p und s1n mit s1p > s1n,}$$

$$\text{Sensor S2: s2p und s2n mit s2p > s2n.}$$

Der Ausgang der Quantifizierungseinheit 4 besitzt somit 4 Leitungen 4a, die auf den Eingang eines mit D-Flip-Flops ausgebildeten Zwischenspeichers 6 gelegt werden.

Auf jeder der Leitungen stehen die Informationen "keine Beschleunigung", positive Beschleunigung" oder "negative Beschleunigung" jeweils für die Sensoren S1 bzw. S2 zur Verfügung. Somit werden auf 4 Leitungen lediglich 6 unterschiedliche Informationen mit Hilfe des Zwischenspeichers 6 in von einem Taktsignal clk vorgegebenen konstanten Zeitintervallen zwischengespeichert. Hierzu wird das von einem Taktgenerator 16 erzeugte Taktsignal clk über eine Leitung 16a diesem Zwischenspeicher zugeführt, so daß die Sensorwerte bis zum nächsten Clock-Impuls an dessen Ausgang anstehen und damit über eine Leitung 6a gleichzeitig am Eingang einer nachgeschalteten Addierstufe 7 zur Verfügung stehen. In dieser Addierstufe 7 werden die quantifizierten Sensorsignale aufaddiert, so daß deren Summe mit jedem Zeittakt als 3-Bit-Vektor an dessen Ausgang zur Verfügung stehen, die dann über eine Leitung 7a nachgeschalteten Verarbeitungseinheiten zugeführt wird.

Diese Addition stellt eine Bewertungsfunktion dar, die auf die quantifizierten Sensorsignale angewendet wird, um hieraus mit jedem zeittakt einen Sensorsignalkennungswert, also die Summe zu erzeugen. Beispielhaft soll im folgenden die Wahrheitstabelle einer solchen Bewertungsfunktion für die zwei Sensoren S1 und S2 gezeigt werden, wobei deren Empfindlichkeitsachsen gemäß Figur 3 angeordnet sind. Somit kann der Sensor S1 in Fahrtrichtung gesehen als linker Sensor und der Sensor S2 als rechter Sensor bezeichnet werden.

| | linker Sensor S1 | | rechter Sensor S2 | | Ausgang Addierstufe 7 | |
|---|---|---|---|---|---|---|
| | s1p | s1n | s2p | s2n | Vektor V | dez |
| 1 | 0 | 0 | 0 | 0 | (0, 0, 0) | 0 |
| 2 | 1 | 0 | 0 | 0 | (0, 0, 1) | +1 |
| 3 | 0 | 1 | 0 | 0 | (1, 0, 1) | -1 |
| 4 | 0 | 0 | 1 | 0 | (0, 0, 1) | +1 |
| 5 | 1 | 0 | 1 | 0 | (0, 1, 0) | +2 |
| 6 | 0 | 1 | 1 | 0 | (0, 0, 0) | 0 |
| 7 | 0 | 0 | 0 | 1 | (1, 0, 1) | -1 |
| 8 | 1 | 0 | 0 | 1 | (0, 0, 0) | 0 |
| 9 | 0 | 1 | 0 | 1 | (1, 1, 0) | -2 |

In dieser Wahrheitstabelle sind in den Spalten "linker Sensor" und "rechter Sensor" die von der Quantifiziereinheit 4 erzeugten Werte aufgeführt. Dabei zeigt der wert "0", daß der entsprechende schwellwert nicht erreicht wurde, während der Wert 1" das Erreichen der entsprechenden Schwelle anzeigt. so bedeutet "0", daß weder eine positive noch eine negative Beschleunigung vorliegt, während eine "1" eine positive bzw. negative Beschleunigung anzeigt.

In der sich an die genannten Spalten anschließende Spalte "Ausgang Addierstufe 7" sind die Ergebnisse der Addition als 3-Bit-Vektor V eingetragen. Schließlich ist die letzte Spalte für den entsprechenden Dezimalwert vorgesehen.

Wie aus dieser Wahrheitstabelle zu ersehen ist, wird die Bewertungsfunktion so definiert, daß die in den sensorsignalen enthaltenen Richtungsinformationen im wesentlich verloren gehen. So werden die bei einem von links vorne oder rechts vorne erfolgten Zusammenstoß des Fahrzeuges erhaltenen sensorsignale mit (+1) bewertet (siehe Zeilen 2 und 4), während bei einem entsprechenden Zusammenstoß von links hinten oder rechts hinten die Bewertung (-1) lautet (siehe Zeilen 3 und 7).

Gemäß den Zeilen 5 und 9 wird ein Zusammenstoß in Fahrtrichtung bzw. entgegen der Fahrtrichtung mit (+2 bzw. -2) bewertet.

In allen anderen Fällen, wenn also die vorgegebenen Schwellen nicht erreicht werden, bei einem Zusammenstoß von rechts bzw. links (vgl. Zeile 6 bzw. Zeile 8) wird ein 0-Vektor von der Addierstufe 7 ausgegeben.

Diese von der Addierstufe 7 ausgegebenen vektoren V werden über die Leitung 7a einem Komparator 8, einem Register 9 und einer Funktionseinheit 10 zugeführt, die aus dem aktuell zugeführten Vektor V und einem im vorangegangenen Zeittakt erzeugten Vektor $V_0$ die Differenz und deren Betrag bildet. Dieser Vektor $V_0$ ist in dem Register 9 abgespeichert und wird im Zeittakt über eine Leitung 9a der Funktionseinheit 10 zugeführt.

Die in der Funktionseinheit 10 durchgeführte Operation entspricht einer Differenzierung mit anschließender Betragsbildung der Summe der quantifizierten sensorwerte, womit der Betrag der Steigung von aufeinanderfolgenden Summenwerten auf der Leitung 10a, die zu einem Integrator 13 führt, anstehen.

In diesem Integrator 13 werden die in aufeinanderfolgenden Zeittakten gebildeten Steigungswerte aufsummiert und bildet ein Crash-Signal P, das in einem nachgeschalteten Komparator 14 mit einer Auslöseschwelle K2 verglichen wird. Wenn diese Auslöseschwelle K2 von dem Crash-Signal P erreicht wird, erfolgt eine Auslösung der Sicherheitsvorrichtungen.

Da in den Integrator 13 ausschließlich positive Werte hineinfließen, wäre der integratorinhalt immer monoton steigend, was zu unerwünschten Ergebnissen führen würde. Daher muß dieser Integrator 13 zu bestimmten Zeitpunkten zurückgesetzt werden, was mittels dem schon erwähnten Komparator 8, einem Zähler 11 und einem weiteren Komparator 12 durchgeführt wird.

Zunächst soll dieser Integrator 13 immer dann zurückgesetzt werden, wenn über einen bestimmten Zeitraum keine Auslösung erfolgt. Hierzu wird der von dem Zähler 11 erzeugte Zählwert mit einer von einem Register-RAM 15 bereitgestellten Zeitkonstante $T_R$ mittels des Komparators 12 verglichen. Übersteigt der über eine Leitung 11a dem Komparator 12 zugeführte Zählwert diese Zeitkonstante $T_R$ wird dem Integrator über eine Leitung 12a ein Reset-Impuls zugeführt.

Der Reset-Eingang des Zählers 11 ist mit dem Ausgang des Komparators 8 verbunden, der über eine Leitung 8a seine Ausgangssignale auch einem UND-Gatter 25 zuführt, das gleichzeitig auch das Taktsignal clk erhält. Das Taktsignal clk wird also nur dann für den Integrator 13 freigegeben, wenn ein Ausgangssignal des Komparators 8 anliegt.

Ein Ausgangssignal wird von dem Komparator 8 dann erzeugt, wenn ein von der Addierstufe 7 erzeugter Vektor eine Zählschwelle K1 überschreitet. Diese Zählschwelle K1 wird über eine Leitung 10a von dem Register-RAM 15 bereitgestellt.

Beispielhaft soll im folgenden die Wahrheitstafel eines solchen Komparators 8 gezeigt werden.

| Vektor V | Ausgang Komparator 8 |
|---|---|
| (0, 0, 0) | 0 |
| (0, 0, 1) | 1 |
| (0, 1, 0) | 1 |
| (1, 0, 1) | 0 |
| (1, 1, 0) | 0 |

Hieraus ist zu ersehen, daß der Komparator 8 lediglich bei den Vektoren (0, 0, 1) und (0, 1, 0) ein Ausgangssignal erzeugt, also nur dann wenn ein Zusammenstoß von links bzw. rechts vorne oder in Fahrtrichtung von vorne zu erwarten ist. In einem solchen Fall wird der Zähler 11 auf "0" gesetzt und bewirkt ebenfalls ein Zurücksetzen des Integrators 13, falls innerhalb der Zeitkonstanten $T_R$ das von dem Integrator 13 erzeugte Crash-Signal P nicht die Ausiöseschwelle K2 erreicht. Diese Auslöseschwelle K2 ist ebenfalls in dem Register-RAM 15 abgelegt.

In allen anderen Fällen von Zusammenstößen wird kein Ausgangssignal erzeugt, so daß die mit diesen Vektoren V bestimmten Steigungswerte in dem Integrator 13 nicht aufintegriert werden, da dann das Taktsignal clk den Integrator 13 nicht erreicht.

Die beiden Konstanten K1 und $T_R$ müssen aufeinander abgestimmt sein und werden anhand von für jeden Fahrzeugtyp vorliegenden Crash-Daten bestimmt. Dabei müssen diese Konstanten so gewählt werden, daß eine Auslösung erfolgen muß, wenn dies geforderten ist bzw. keine Fehlauslösungen auftreten dürfen. Das mit der Schaltungsanordnung nach Figur 2 durchgeführte Verfahren erfüllt mit entsprechend gewählten Konstanten K1 und $T_R$ diese Bedingungen, klassifiziert also alle Crashs zu 100 %, wobei auch die Zündverzugszeiten in einem akzeptablen Rahmen liegen. Da der Auslösezeitpunkt der Sicherheitsvorrichtungen innerhalb einer bestimmten Zeitdauer nach der Detektion eines gefährlichen Crashs durch die Sensoren erfolgen muß, gibt die Zündverzugszeit diejenige Zeitspanne an, die über diese bestimmte Zeitdauer hinausgeht.

Statt einer hardwaremäßigen Realisierung des erfindungsgemäßen Verfahrens kann die Auswertung der Sensorsignale auch mittels eines einfachen 4-Bit-Prozessors durchgeführt werden. Somit besteht die Auswerteeinheit 1 gemäß Figur 4 aus einer Quantifizierungseinheit 4 und einem Mikroprozessor µP. Die anderen Funktionseinheiten entsprechen denjenigen aus Figur 1.

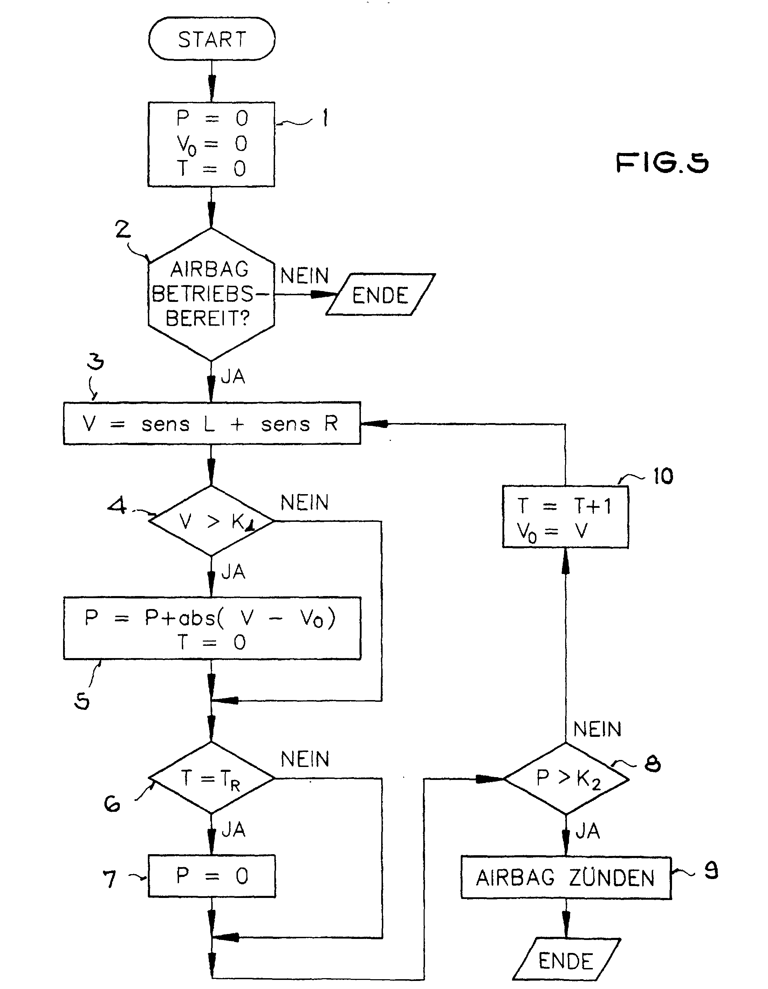

Eine für einen solchen Mikroprozessor µP vorgesehene Softwarerealisierung zeigt der Programmablaufplan gemäß Figur 5. Nach dem Start des Programms erfolgt in Schritt 1 die Initialisierung der Programmvariablen P, $V_0$ und T. Dabei stellt P den Wert der aufintegrierten Werte der Beträge der Steigungen dar, $V_0$ ist der zu einem Vektor V gehörige Vektor aus einem vorangehenden zeittakt und T gibt den Zeittakt an.

wenn gemäß Schritt 2 feststeht, daß der Airbag betriebsbereit ist, wird die Summe aus den quantifizierten Sensorsignalen sensL und sensR als Vektor V gebildet. Anschließend wird in Schritt 4 dieser Vektor V mit der zählschwelle K1, deren Bedeutung im Zusammenhang mit Figur 2 erläutert wurde, verglichen. Übersteigt der Vektor V diese Konstante K1 wird der Absolutbetrag der Differenz aus diesem Vektor V mit dem im vorhergehenden Zeittakt gebildeten Vektor $V_0$ gebildet und gemäß der angegebenen Formel aufintegriert, d. h. zum vorgehenden Integratorwert P hinzuaddiert. Gleichzeitig wird auch der Zeittakt T auf "0" gestellt. Im anderen Fall wird dieser Schritt 5 übersprungen und der Zeittakt in Schritt 6 mit der Zeitkonstante $T_R$ verglichen, deren Bedeutung ebenfalls schon im Zusammenhang mit der Figur 2 erläutert wurde. Erreicht der Zelttakt T diese Schwelle wird anschließend in Schritt 7 der Integratorwert P zurückgestellt. Im anderen Fall wird dieser Schritt 7 übersprungen.

Falls der Zeittakt diese zeitkonstante $T_R$ nicht erreicht hat, wird in schritt 8 der Integratorwert P mit einer Auslöseschwelle K2 verglichen und ggf. die Sicherheitsvorrichtungen im Fahrzeug ausgelöst (vgl. Schritt 9). Falls die Auslöseschwelle K2 noch nicht erreicht ist, wird der Zeittakt T auf T+1 gestellt und der aktuelle Vektor V wird zum Vektor $V_0$ (vgl. Schritt 10), um anschließend wieder mit Schritt 3 zu beginnen.

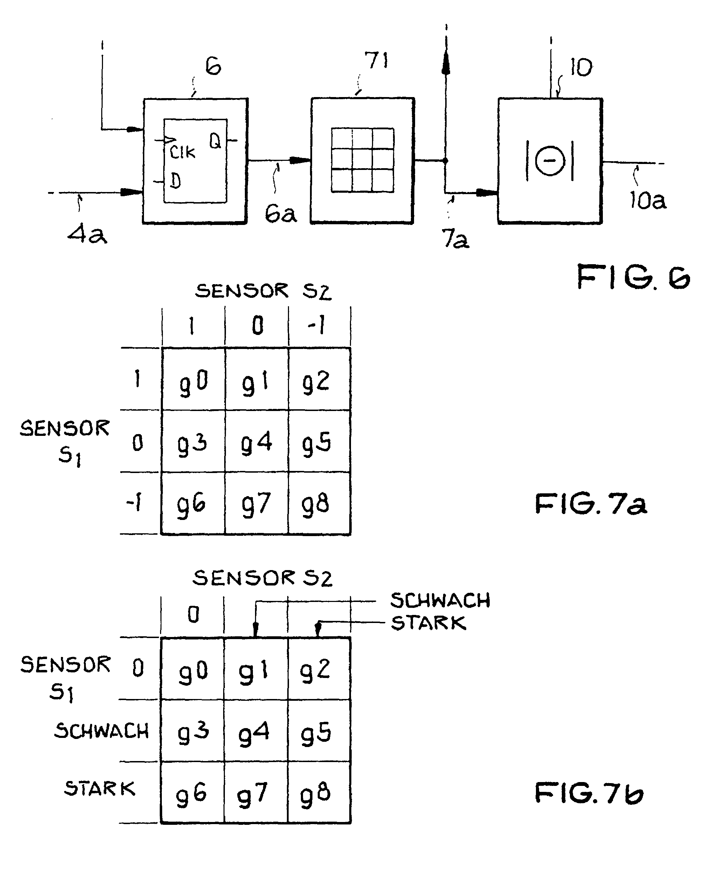

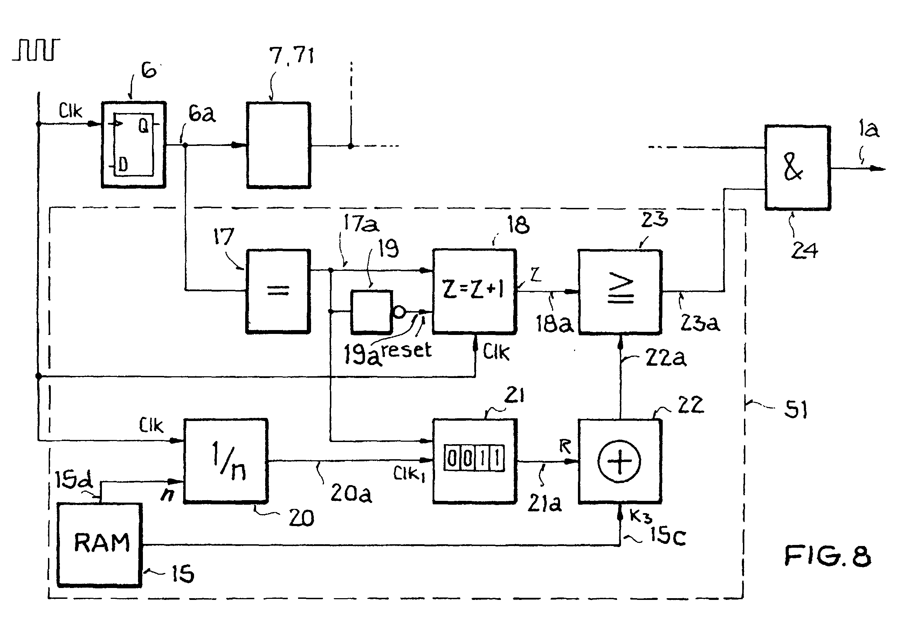

Das anhand der Figur 2 und 5 erläuterte erfindungsgemäße Verfahren ist sehr einfach und zuverlässig hinsichtlich des Klassifikationsverhaltens. Eine Verbesserung des Zeitverhaltens wird mit einer solchen Bewertung der quantifizierten Sensorsignale erreicht, die sich auf die Auswertung der Richtungsinformationen bei Verwendung von zwei gemäß Figur 2 in einem Fahrzeug angeordneten Sensoren S1 und S2 stützt. Eine hardwaremäßige Realisierung einer solchen Bewertung zeigt Figur 6, wobei dort lediglich ein Ausschnitt der Schaltungsanordnung nach Figur 2 dargestellt ist. In dieser Figur 6 ist anstelle der aus Figur 2 bekannten Addierstufe 7 eine Parameter-Matrix als RAM-Matrix 71 zwischen dem Zwischenspeicher 6 und der Funktioneinheit 10 geschaltet, deren Funktionen Im Zusammenhang mit Figur 2 erläutert wurden. Eine zugehörige Bewertungs-Matrix zeigen jeweils die Figuren 7a und 7b.

Gemäß dem Ausführungsbeispiel nach Figur 7a werden den quantifizierten Sensorwerten der Sensoren S1 und S2 jeweils ein Parameter gi (i = 0 ... 8) zugeordnet. Dabei stellen die quantifizierten Sensorwerte 0, 1 und -1 die Information "keine Beschleunigung", positive Beschleunigung" bzw. "negative Beschleunigung" dar. Somit stehen am Ausgang der RAM-Matrix 71 die gi-Werte als 3-Bit-Vektoren V, die in entsprechender Weise wie die Vektoren V gemäß Figur 2 weiterverarbeitet werden. Dabei hat sich gezeigt, daß eine Genauigkeit von 3 Bit eines gi-Wertes ausreichend ist, so daß jeder einzelne Wert zwischen -3 und 3 liegen kann. Die optimale Belegung der RAM-Matrix 71 hängt von der jeweiligen Fahrzeugsignatur ab und muß auf das jeweilige Fahrzeug mit Hilfe von crash-Daten abgestimmt werden.

Eine weitere Verbesserung des zeitverhaltens des erfindungsgemäßen Verfahrens wird mit der Bewertungsmatrix nach Figur 7b erzielt, wo die Quantifizierung der sensorsignale nicht mit einer positiven und negativen Schwelle Sn und Sp erfolgt, sondern wo beide schaltschwellen positiv sind und mit einer hohen und niedrigen Schwelle quantifiziert wird, also eine starke oder schwache Beschleunigung detektierbar ist.

Eine softwaremäßige Realisierung ist auch mit einer solchen Bewertungs-Matrix als Bewertungsfunktion möglich und entspricht im wesentlichen dem Programmablaufplan gemäß Figur 5 mit dem Unterschied, daß der Vektor nicht als Addition aus den quantifizierten Sensorwerten gebildet wird, sondern aus der Bewertungs-Matrix zu entnehmen ist.

Neben dem erfindungsgemäßen Verfahren, das anhand der Ausführungsbeispiele gemäß den Figuren 2 und 6 bzw. Figur 5 erläutert wurde, kann eine Zusatzauswertung der quantifizierten sensorsignale durchgeführt werden, das das Zündzeitverhalten derart verbessert, daß ein Zündzeitverzug im wesentlichen vermieden wird.

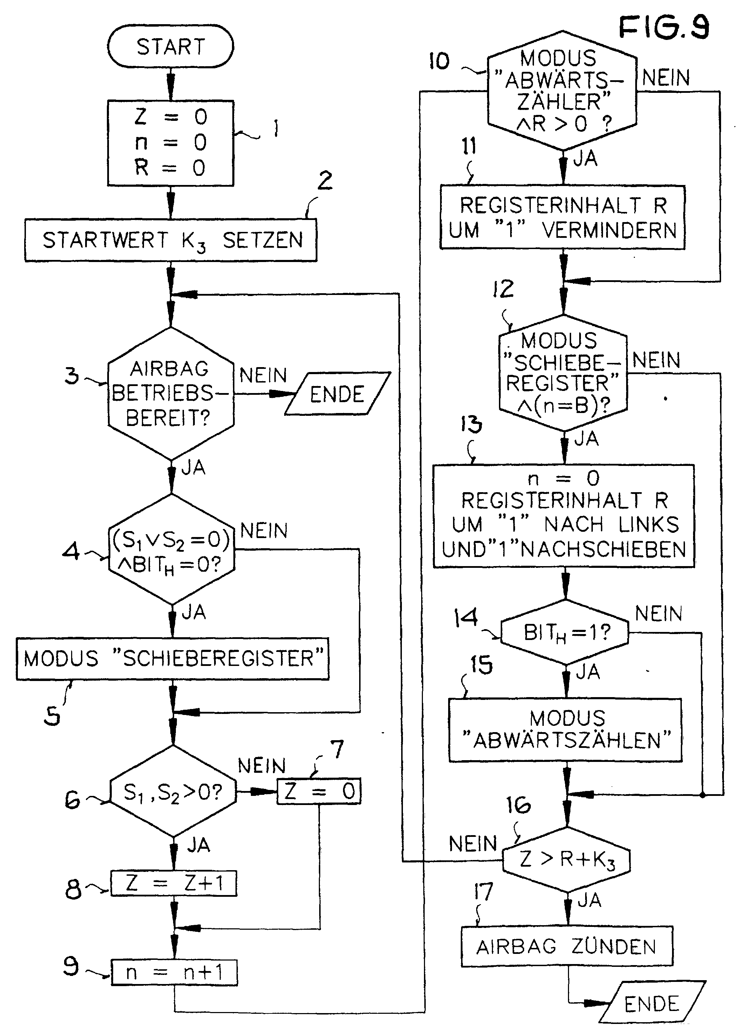

Diese Zusatzauswertung kann hardwaremäßig gemäß der Schaltungsanordnung nach Figur 8 oder softwaremäßig gemäß dem Programmablaufplan nach Figur 9 realisiert werden.

In Figur 8 ist die schaltungsanordnung nach Figur 2 nur teilweise dargestellt, wobei die die Bewertungsfunktion realisierende Funktioneinheit entweder als Addierstufe 7 oder als Bewertungs-Matrix 71 ausgebildet sein kann. Bei dieser Zusatzauswertung wird eine dynamisch nach oben verschiebbare Auslöseschwelle Z erzeugt, die exponentiell mit dem vorgegebenen Zeitraster ansteigt. Da die Schwelle zu Beginn klein ist, bedeutet dies, daß dieses Verfahren nur zu Beginn eines Zusammenstoßes auslösen kann. Somit werden bei Vorliegen eines schweren Zustoßes unmittelbar die Sicherheitsvorrichtungen ausgelöst.

Die zwischengespeicherten, quantifizierten Sensorwerte werden über die Leitung 6a zunächst einem Komparator 17 zugeführt, mit dem überprüft wird, ob die in jedem zeittakt vorliegenden quantifizierten sensorwerte der Sensoren S1 und S2 positiv sind (d. h. eine Aufprallrichtung entgegen der Fahrtrichtung des Fahrzeuges anzeigen). Ist dies der Fall, wird über eine Leitung 17a ein Startimpuls sowohl einem Zähler 18 als auch einer Funktioneinheit 21 zugeführt, die entweder als Schieberegister oder als Zähler betrieben werden kann. Gleichzeitig wird ein solches Signal einem NAND-Gatter 19 zugeführt, das bei entsprechendem Eingangssignal über eine Leitung 19a ein Reset-Signal dem Zähler 18 zuführt.

In bezug auf diesen Zähler 18 hat ein solches Startsignal die Wirkung, daß dessen Zählerstand um "1" erhöht wird. Im anderen Fall, wenn also die beiden Sensorwerte nicht positiv sind, wird er auf "0" zurückgesetzt. Damit zählt dieser Zähler 18 diejenigen Sensorwertpaare, die nacheinander eine Beschleunigung in positiver Richtung anzeigen, also in den ersten Quadranten fallen.

Der Zählerstand Z dieses Zählers 18 dient nun als Crash-Signal und wird über eine Leitung 18a einem weiteren Komparator 23 zugeführt, der einen Vergleich mit der dynamischen Auslöseschwelle (R + K3) durchführt. Wird diese Auslöseschwelle (R + K3) von dem Crash-Signal Z überschritten, erfolgt eine Aktivierung der Auslösemittel der Sicherheitsvorrichtungen.

Diese verschiebbare Auslöseschwelle (R + K3) wird in einer Addierstufe 22 erzeugt, indem zu einem Startwert K3, der über eine Leitung 15c eines RAM-Registers 15 eingegeben wird, ein mit dem zeittakt zunehmender Zählwert R, der über eine Leitung 21a von der Funktioneinheit 21 stammt, addiert wird.

Um die Auslöseschwelle exponentiell anwachsen zu lassen, muß der von der Funktioneinheit 21 erzeugte Zählwert R im Zeittakt exponentiell anwachsen. Dies wird zusammen mit einer Teilerstufe 20 realisiert, die über eine Leitung 15d einen Teilerfaktor n aus dem RAM-Register 15 und gleichzeitig auch das Taktsignal clk erhält. Hieraus wird ein Taktsignal clk1 mit im Vergleich zum Taktsignal clk geringerer Taktfrequenz erzeugt. Mit dem Teilerfaktor n läßt sich der Anstieg der exponentiellen Auslöseschwelle variieren und so der Fahrzeugsignatur anpassen.

Im folgenden soll nun die Aufgabe der Funktioneinheit 21 erläutert werden. Es wird zunächst davon ausgegangen, daß deren Registerinhalt "0" ist. Ein von dem Komparator 17 erzeugter Startimpuls bewirkt nun das Einschreiben einer "1" an der Bit-niedrigsten Stelle, die sich von diesem Zeitpunkt an mit jedem von der Teilerstufe 20 erzeugten Taktsignal clk1 nach links schiebt, wobei gleichzeitig eine "1" nachgeschoben wird. Dies geschieht so lange, bis die höchstwertigste Bitstelle gesetzt ist. Zu diesem Zeitpunkt wird von der Funktion "Schieberegister" auf die Funktion "Abwärts-Zähler" automatisch umgeschaltet. Nun wird der Registerinhalt R bis auf "0" heruntergezählt. Sobald das höchstwertigste Bit während des Abwärtszählens erlischt (d. h. die höchstwertigste Bitstelle eine "0" aufweist), wird ein von dem Komparator 17 erzeugter Impuls wieder berücksichtigt, so daß ein Umschalten zur Funktion "Schieberegister" erneut erfolgen kann.

In der Funktion "Schieberegister" werden in den ersten Zeittakten zunächst kleine Werte R = "1" und R = "11" ausgegeben, während mit fortschreitendem Zeittakt die werte R schnell sehr groß werden: R = "111" und R = "1111".

Das Abwärtszählen erfolgt dagegen bitweise und somit wesentlich langsamer. Dies hat zur Folge, daß eine bestimmte Zeitdauer vergehen muß, bevor das verfahren (also die Umschaltung auf die Funktion "Schieberegister") erneut aktiviert werden kann.

Der in Figur 9 gezeigte Programmablaufplan stellt die softwaremäßige Realisierung dieses erweiterten Auswerteverfahrens mit einem Mikroprozessor dar. Nach dem Start des Programms wird in Schritt 1 die Zählerfunktion Z, die Teilerfunktion n und der Registerinhalt R auf "0" gesetzt. In Schritt 2 wird der Startwert K3 gesetzt, dessen Bedeutung im Zusammenhang mit Figur 8 erläutert wurde.

Falls die Sicherheitsvorrichtungen betriebsbereit sind (vgl. Schritt 3) wird anschließend in einem schritt 4 überprüft, ob eines der sensorsignale S1 oder S2 "0" sind und die höchstwertigste Bitstelle $Bit_H$ besetzt ist. Falls dies zutrifft, wird der Betriebsmodus "Schieberegister" gemäß Schritt 5 aktiviert. Im anderen Fall wird dieser Schritt 5 übersprungen.

Falls gemäß Schritt 6 beide Sensorsignale S1 und S2 positiv sind, wird anschließend die Zählerfunktion Z um "1" erhöht. Trifft dies nicht zu, wird der Zähler auf "0" gesetzt und lediglich Schritt 9 durchgeführt. Die Erhöhung des Teilers n auf n + 1 wird so oft durchgeführt, bis eine obere Schranke erreicht ist (Schritt 12). Beim Erreichen dieser Schranke B erfolgt eine Schiebeoperation bei dem Register R und ein Zurücksetzen des Teilers n auf "0" (Schritt 13).

In Schritt 10 wird überprüft, ob im Betriebsmodus "Abwärtszähler" ein Registerinhalt (R > 0) vorhanden ist. Falls dies vorliegt wird der Registerinhalt R um "1" vermindert, andernfalls wird dieser schritt 11 übersprungen.

Falls jedoch der Betriebsmodus "Schieberegister" gemäß Schritt 12 vorliegt und der Zähler n eine Schwelle B erreicht hat, wird der Teiler n auf "0" gesetzt und der Registerinhalt R um "1" erhöht und gleichzeitig eine "1" nachgeschoben (vgl. Schritt 13). Die Schwelle B wird so gewählt, daß der Wert im Register R sich zeitlich in angepaßter Weise zum Fahrzeugtyp exponentiell verändert. Wenn die höchstwertigste Bitstelle besetzt ist ($Bit_H$ = 1), wird gemäß Schritt 15 der Betriebsmodus "Abwärtszähler" eingestellt, andernfalls Schritt 15 übersprungen, um den nächsten Schritt 16 durchzuführen.

Liegt dagegen der Betriebsmodus "Schieberegister" (vgl. Schritt 12) nicht vor oder ist n < B, dann wird mit Schritt 16 die summe aus Registerinhalt R und Startwert K3 gebildet, die nun die Auslöseschwelle darstellt, und mit dem Zählerstand Z verglichen. Wird diese Auslöseschwelle überschritten, erfolgt eine Auslösung der Sicherheitsvorrichtungen (vgl. Schritt 17), andernfalls erfolgt ein Rücksprung nach schritt 3.

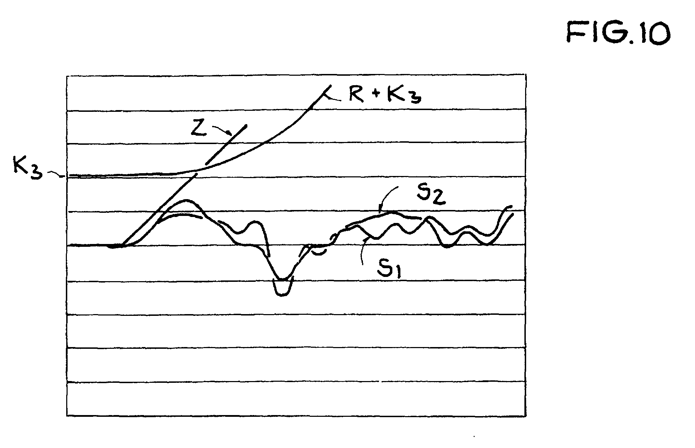

In dem Diagramm nach Figur 10 wird die Wirkungsweise dieses Auswerteverfahrens gezeigt. Hierbei geben die Kurven S1 und S2 den Verlauf der Beschleunigungssignale der Sensoren S1 und S2 während eines Zusammenstoßes an. Mit Beginn des Zusammenstoßes zeigen beide Sensorsignale gleichzeitig positive werte, so daß das crash-Signal Z linear ansteigt und gleichzeitig die Auslöseschwelle (R + K3) erzeugt wird. Im Schnittpunkt dieser beiden Kurven Z und (R + K3) erfolgt die Auslösung der Sicherheitsvorrichtungen.

Dieses zusätzliche Auswertungsverfahren kann in vorteilhafter weise mit den eingangs beschriebenen Ausführungsbeispielen so abgestimmt werden, daß neben einer 100 %-Crash-Klassifizierung ein sehr gutes zeitliches Verhalten, d. h. eine sehr schnelle Zündung im crash-Fall erreicht wird.

**Patentansprüche**

1. Verfahren zur Auslösung einer passiven Sicherheitsvorrichtung in einem Fahrzeug für Fahrzeuginsassen, bei dem mittels elektrischer Sensoren (S1, S2), die einen kritischen Fahrzeugzustand detektieren, einer Auswerteschaltung (1) und Auslösemitteln für die Sicherheitsvorrichtung in Abhängigkeit der von den Sensoren (S1, S2) gelieferten Beschleunigungssignale eine Aktivierung der Auslösemittel derselben erfolgt, wobei in einem ersten Verfahrenschritt die Sensorsignale quantifiziert werden, **gekennzeichnet durch** folgende weitere Verfahrensschritte:

   a) Erzeugung von Sensorsignalkennungswerten (Vektoren V, V•) aus den quantifizierten Sensorsignalen mittels einer Bewertungsfunktion,
   b) Differenzierung der Sensorsignalkennungswerte (Vektoren V, V•),
   c) Betragsbildung der differenzierten Sensorsignalkennungswerte (V-V•),
   d) Integration der Beträge (abs (V-V•)) der differenzierten Sensorsignalkennungswerte (V-V•) und
   e) Vergleich der Integrationswerte (P) mit einer Auslöseschwelle (K2).

2. Verfahren nach Anspruch 1, **dadurch gekennzeichnet, dass** als Bewertungsfunktion eine Addition der quantifizierten Sensorsignale durchgeführt wird und die Summe dieser Addition den Signalkennungswert (Vektor V, V•) darstellt.

**3.** Verfahren nach Anspruch 1, **dadurch gekennzeichnet, dass** als Bewertungsfunktion eine Bewertungs-Matrix (71) derart vorgesehen ist, dass den quantifizierten Sensorwerten ein Signalkennungswert (gi, i = 1, ..., 8) aus der Bewertungs-Matrix (71) zugeordnet wird.

**4.** Verfahren nach einem der vorangehenden Ansprüche, **dadurch gekennzeichnet, dass** zwei Schwellen (s1p, s1n, s2p, s2n) für jeden Sensor (S1, S2) zur Quantifizierung verwendet werden.

**5.** Verfahren nach Anspruch 4, **dadurch gekennzeichnet, dass** eine positive und eine negative Schwelle (s1p, s1n, s2p, s2n) für jeden Sensor (S1, S2) verwendet wird.

**6.** Verfahren nach Anspruch 4, **dadurch gekennzeichnet, dass** zwei positive Schwellen (s1p, s2p) verwendet werden.

**7.** Verfahren nach einem der Ansprüche 1 bis 6, **dadurch gekennzeichnet, dass** die quantifizierten Sensorwerte zusätzlich einer Identitätsprüfung hinsichtlich dem Vorliegen von gleichzeitig eine positive Beschleunigung anzeigenden Sensorsignalen unterworfen werden, dass bei Identität zeitlich aufeinanderfolgender Sensorsignale ein linear ansteigendes Crash-Signal erzeugt wird, dass in Abhängigkeit der von der Identitätsprüfung erzeugten Sensorsignalkennungswerten eine ansteigende Auslöseschwelle erzeugt wird und dass schließlich eine Aktivierung der Auslösemittel dann erfolgt, wenn der Wert des Crash-Signals die Auslöseschwelle erreicht.

**8.** Verfahren nach Anspruch 7, **dadurch gekennzeichnet, dass** die Auslöseschwelle einen exponentiellen Verlauf annimmt.

**9.** Vorrichtung zur Durchführung des Verfahrens nach einem der vorangehenden Ansprüche, die Komparatoren (K1, ..., K4) zur Quantifizierung der Sensorsignale umfasst, **gekennzeichnet durch** folgende weiteren Merkmale:

a) Es sind Mittel (7, 71, µP) zur Erzeugung der Sensorsignalkennungswerte (Vektoren V, V•) vorgesehen,
b) des Weiteren sind Mittel (9, 10) zur Differenzierung der Signalkennungswerte (Vektoren V, V.) und zur Betragsbildung der differenzierten Signalkennungswerte (V-V•) vorgesehen,
c) ferner ist ein Integrator (13) zur Integration der Beträge (abs (V-V•)) der differenzierten Signalkennungswerte (V-V•) vorgesehen, und
d) schließlich dient ein Komparator (14) zum Vergleich der Integrationswerte (P) mit der Auslöseschwelle (K2).

**10.** Vorrichtung nach Anspruch 9, **dadurch gekennzeichnet, dass** die quantisierten Sensorsignale mittels D-Flip-Flops (6) zwischengespeichert werden.

**11.** Vorrichtung nach einem der Ansprüche 9 oder 10, **dadurch gekennzeichnet, dass** zwei Beschleunigungssensoren (S1, S2) vorgesehen sind, deren Empfindlichkeitsachsen mit einem Winkel von +45° bzw. -45° gegen die Längsachse des Fahrzeuges (F) in Fahrtrichtung gerichtet sind.

**12.** Vorrichtung nach einem der Ansprüche 9 bis 11, **dadurch gekennzeichnet, dass** die Identitätsprüfung mittels eines Komparators (17) durchgeführt wird, dem zur Realisierung des Crash-Signals ein Zähler (18) nachgeschaltet ist.

**13.** Vorrichtung nach Anspruch 12, **dadurch gekennzeichnet, dass** zur Realisierung der Auslöseschwelle ein Taktgenerator (20), ein als Zähler verwendetes Schieberegister (21) und eine dem Schieberegister nachgeschaltete Addierstufe (22) vorgesehen sind, wobei das Schieberegister (21) dem Komparator (17) nachgeschaltet ist und die Addierstufe (22) zur Erzeugung der Auslöseschwelle (K3 + R) den Inhalt des Schieberegisters (21) zu einem Startwert (K3) hinzuaddiert.

**Claims**

**1.** A method of triggering an in-vehicle, passive safety device for the occupants of the motor vehicle wherein, by means of electrical sensors (S1, S2) which detect a critical state of the vehicle, an evaluating circuit (1) and a triggering means for the safety device, activation of the triggering means thereof is effected in dependence on the acceleration signals produced by the sensors (S1, S2), and wherein the sensor signals are quantified in a first method step, **characterised by** the following further method steps:

a) producing values characteristic of the sensor signals (vectors V, V.) from the quantified sensor signals by means of an evaluating function,
b) differentiating the values characteristic of the sensor signals (vectors V, V.),
c) forming the modulus of the differentiated values characteristic of the sensor signals (V - V.),
d) integrating the moduli (absolute |V - V.| ) of the differentiated values characteristic of the sensor signals (V - V.), and
e) comparing the integrated values (P) with a triggering threshold value (K2).

2. A method in accordance with Claim 1, **characterised in that** the evaluating function is effected in the form of an addition of the quantified sensor signals and the sum obtained from this process of addition represents the value characteristic of the signals (vectors V, V•).

3. A method in accordance with Claim 1, **characterised in that** the evaluating function is provided in the form of an evaluating matrix (71) in such a manner that a signal **characterising** value (gi, i = 1, ..., 8) from the evaluating matrix (71) is associated with the quantified sensor values.

4. A method in accordance with any of the preceding Claims, **characterised in that** two thresholds (s1p, s1n, s2p, s2n) are used for each sensor (S1, S2) for the purposes of the quantification process.

5. A method in accordance with Claim 4, **characterised in that** a positive and a negative threshold (s1p, s1n, s2p, s2n) is used for each sensor (S1, S2).

6. A method in accordance with Claim 4, **characterised in that** two positive thresholds (s1p, s2p) are used.

7. A method in accordance with any of the Claims 1 to 6, **characterised in that** the quantified sensor signals are additionally subjected to an identity check in regard to the presence of simultaneous sensor signals indicative of a positive acceleration, **in that** a linearly increasing crash signal is produced in the event of identity between temporally successive sensor signals, **in that** an increasing threshold is produced in dependence on the values characteristic of the sensor signals that are produced by the identity checking process, and **in that** activation of the triggering means occurs thereafter if the value of the crash signal reaches the triggering threshold.

8. A method in accordance with Claim 7, **characterised in that** the triggering threshold takes the form of an exponential waveform.

9. A device for carrying out the method in accordance with any of the preceding Claims, which device comprises comparators (K1, ..., K4) for the purposes of quantifying the sensor signals and which is **characterised by** the following further features:

a) means (7, 71, $\mu$P) are provided for producing the values characteristic of the sensor signals (vectors V, V.),
b) moreover, means (9, 10) are provided for differentiating the values characteristic of the sensor signals (vectors V, V.) and for forming the modulus of the differentiated values characteristic of the sensor signals (V - V.),
c) furthermore, an integrator (13) is provided for integrating the moduli (absolute |V - V.|) of the differentiated values characteristic of the signals (V - V.), and
d) finally, a comparator (14) serves for comparing the integrated values (P) with the triggering threshold (K2).

10. A device in accordance with Claim 9, **characterised in that** the quantized [sic] sensor signals are buffer stored by means of D-type flip-flops (6).

11. A device in accordance with Claims 9 or 10, **characterised in that** there are provide two acceleration sensors (S1, S2) having axes of sensitivity which are respectively aligned at an angle of +45° and -45° relative to the longitudinal axis of the vehicle (F) in the direction of travel.

12. A device in accordance with any of the Claims 9 to 11, **characterised in that** the identity checking process is carried out by means of a comparator (17) having a counter (18) connected to the output thereof for the purposes of implementing the crash signal.

13. A device in accordance with Claim 12, **characterised in that** there are provided a clock pulse generator (20), a shift register (21) that is used as a counter and an adding stage (22) that is connected to the output of the shift register for the purposes of implementing the triggering threshold, wherein the shift register (21) is connected to the output of the comparator (17) and the adding stage (22) adds the content of the shift register (21) to a start value (K3) for producing the triggering threshold (K3 + R).

**Revendications**

1. Procédé de déclenchement d'un dispositif de sécurité passif dans un véhicule pour des passagers, selon lequel au moyen de capteurs électriques (S1, S2), qui détectent un état critique du véhicule, d'un circuit d'évaluation (1) et de moyens de déclenchement pour le dispositif de sécurité, une activation des moyens de déclenchement de ce dispositif est exécutée en fonction des signaux d'accélération délivrés par les capteurs (S1, S2), auquel cas lors d'une première étape du procédé, les signaux des capteurs sont quantifiés, **caractérisé par** d'autres étapes du procédé indiquées ci-après:

   a) production de valeurs (vecteurs V, Vo) d'identification des signaux des capteurs à partir des signaux quantifiés des capteurs à l'aide d'une fonction de pondération,
   b) formation de la différence des valeurs (vecteurs V, Vo) d'identification des signaux des capteurs,
   c) formation des valeurs absolues des différences (V-Vo) des valeurs caractéristiques de signaux des capteurs,
   d) intégration des valeurs absolues (abs (V-Vo)) des différences (V-Vo) des valeurs caractéristiques des signaux des capteurs, et
   e) comparaison des valeurs d'intégration (P) à un seuil de déclenchement (K2).

2. Procédé selon la revendication 1, **caractérisé en ce qu'**une addition des signaux quantifiés des capteurs est identifiée en tant que fonction de pondération et que la somme de cette addition représente la valeur caractéristique (vecteur V, Vo) du signal.

3. Procédé selon la revendication 1, **caractérisé en ce qu'**il est prévu comme fonction de pondération une matrice de pondération (71) de telle sorte qu'une valeur caractéristique de signal (Vi, i = 1, ..., 8) tirée de la matrice de pondération (71) est associée aux valeurs quantifiées des capteurs.

4. Procédé selon l'une des revendications précédentes, **caractérisé en ce que** deux seuils (s1p, s1n, s2p, s2n) sont utilisés pour chaque capteur (S1, S2) pour la quantification.

5. Procédé selon la revendication 4, **caractérisé en ce qu'**on utilise un seuil positif et un seuil négatif (s1p, s1n, s2p, s2n) pour chaque capteur (S1, S2).

6. Procédé selon la revendication 4, **caractérisé en ce qu'**on utilise deux seuils positifs (s1p, s2p).

7. Procédé selon l'une des revendications 1 à 6, **caractérisé en ce que** les valeurs quantifiées des capteurs sont soumises en outre à un contrôle d'identité concernant la présence de signaux de capteurs indiquant simultanément une accélération positive, qu'en cas d'identité de signaux de capteurs se succédant dans le temps, un signal de crash augmentant linéairement est produit, qu'en fonction des valeurs caractéristiques de signaux des capteurs, qui sont produites par le contrôle d'identité, un seuil de déclenchement montant est produit et qu'enfin une activation des moyens de déclenchement est exécutée lorsque la valeur du signal de crash atteint le seuil de déclenchement.

8. Procédé selon la revendication 7, **caractérisé en ce que** le seuil de déclenchement prend une valeur exponentielle.

9. Dispositif pour la mise en oeuvre du procédé selon l'une des revendications précédentes, qui comprend des comparateurs (K1, ..., K4) pour quantifier les signaux des capteurs, **caractérisé par** d'autres caractéristiques indiquées ci-après:

   a) des moyens (7, 71, µP) sont prévus pour produire les valeurs (vecteurs V, Vo) de caractérisation de signaux de capteurs,
   b) d'autre part des moyens (9, 10) sont prévus pour former la différence des valeurs caractéristiques (vecteurs V, Vo) de signaux et pour la formation de la valeur absolue de la différence des valeurs caractéristiques (V-Vo) de signaux,

c) il est en outre prévu un intégrateur (13) pour intégrer les valeurs absolues (abs (V-Vo)) des différences des valeurs caractéristiques (V-Vo) des signaux, et

d) enfin un comparateur (14) sert à comparer les valeurs d'intégration (P) au seuil de déclenchement (K2).

10. Dispositif selon la revendication 9, **caractérisé en ce que** les signaux quantifiés des capteurs sont mémorisés temporairement au moyen de bascules bistables de type D (6).

11. Dispositif selon l'une des revendications 9 ou 10, **caractérisé en ce qu'**il est prévu deux capteurs d'accélération (S1, S2), dont les axes de sensibilité sont orientés en faisant un angle de + 45° et - 45° par rapport à l'axe longitudinal du véhicule (F) dans la direction de déplacement.

12. Dispositif selon l'une des revendications 9 à 11, **caractérisé en ce que** le contrôle d'identité est exécuté au moyen d'un comparateur (17), en aval duquel un compteur (18) est branché pour l'obtention du signal de crash.

13. Dispositif selon la revendication 12, **caractérisé en ce que** pour réaliser le seuil de déclenchement, il est prévu un générateur de cadence (20), un registre à décalage (21) utilisé comme compteur et un étage additionneur (22) branché en aval du registre à décalage, le registre à décalage (21) étant branché en aval du comparateur (17), et l'étage additionneur (22) ajoutant le contenu du registre à décalage (21) à une valeur de démarrage (K3) pour l'obtention du seuil de déclenchement (K3+R).

FIG.1

P FAHRTRICHTUNG

-45°   +45°

S1   S2   F

FIG.3

EP 0 807 558 B1

S1

4

K11

S1p K12

S2

S1n K21

S2p K22

S2n

42

16

16a

RAM — 15

15b

15a

8a

n=n+1 — 11

8

11a

TR

clk

$Z^{-1}$

&

12

6 6a 7

7a 9a

9

25 12a

13

14

Clk Q D

+

$|\ominus|$

10

10a

$\int$

13a

1a

5 1

**FIG. 2**

14

FIG.4

FIG.5

```
        ┌─────────────┐
        │    START    │
        └──────┬──────┘
               │
        ┌──────┴──────┐
        │   P  =  0   │ ～ 1
        │   V₀ =  0   │
        │   T  =  0   │
        └──────┬──────┘
               │
   2           │
        ╱──────┴──────╲
       ╱   AIRBAG      ╲  NEIN    ┌─────────┐
      ╱  BETRIEBS-      ╲────────▶│  ENDE   │
       ╲   BEREIT?     ╱          └─────────┘
        ╲──────┬──────╱
               │ JA
   3           │
   ┌───────────┴──────────────┐
   │  V  =  sens L  +  sens R  │◀──────────────┐
   └───────────┬──────────────┘                │
               │                                │
   4      ╱────┴────╲   NEIN              ┌──────────────┐ ～ 10
         ╱  V > K₁   ╲──────┐            │  T  =  T+1   │
          ╲─────────╱       │            │  V₀ =  V     │
               │ JA         │            └──────┬───────┘
   ┌───────────┴──────────┐ │                   │
   │ P = P+abs( V − V₀ )  │ │                   │
   │        T = 0         │ │            NEIN    │
   └───────────┬──────────┘ │         ╱─────────┴╲
   5           │            │        ╱   P > K₂   ╲ ～ 8
               │            │         ╲───────────╱
   6      ╱────┴────╲  NEIN │              │ JA
         ╱  T = T_R  ╲──────┼─────▶  ┌──────────────┐ ～ 9
          ╲─────────╱       │        │ AIRBAG ZÜNDEN │
               │ JA         │        └──────┬───────┘
   7  ┌────────┴───┐        │               │
      │   P = 0    │        │        ┌───────┴──────┐
      └────────┬───┘        │        │    ENDE      │
               │            │        └──────────────┘
               └────────────┘
```

V = sens L + sens R

$P = P+abs( V - V_0 )$
$T = 0$

$V > K_1$

$T = T_R$

$P = 0$

$T = T+1$
$V_0 = V$

$P > K_2$

AIRBAG ZÜNDEN

FIG. 6

FIG. 7a

SENSOR S2

| | 1 | 0 | -1 |
|---|---|---|---|
| 1 | g0 | g1 | g2 |
| 0 | g3 | g4 | g5 |
| -1 | g6 | g7 | g8 |

SENSOR S1

FIG. 7b

SENSOR S2

| | 0 | | |
|---|---|---|---|
| SENSOR S1 0 | g0 | g1 | g2 |
| SCHWACH | g3 | g4 | g5 |
| STARK | g6 | g7 | g8 |

SCHWACH
STARK

FIG.8

FIG.9

FIG.10